# EUROPEAN PATENT SPECIFICATION

(11) **EP 3 073 078 B1**
(45) Date of publication and mention of the grant of the patent: **22.11.2017**
(21) Application number: 16162260.0
(22) Date of filing: 24.03.2016
(51) Int. Cl.: F01N 3/08, F01N 9/00, F02D 41/02, F02D 41/14

(54) **EXHAUST GAS PURIFICATION CONTROL APPARATUS**
ABGASREINIGUNGSSTEUERUNGSVORRICHTUNG
APPAREIL DE COMMANDE DE PURIFICATION DE GAZ D'ÉCHAPPEMENT

(30) Priority: 27.03.2015 JP 2015066214
(43) Date of publication of application: 28.09.2016
(73) Proprietor: Toyota Jidosha Kabushiki Kaisha, Toyota-shi, Aichi-ken, 471-8571 (JP)
(72) Inventor: HABA, Yuki, Toyota, Aichi 471-8571 (JP); NOZAKI, Yusuke, Toyota, Aichi 471-8571 (JP); YOSHIDA, Kohei, Toyota, Aichi 471-8571 (JP)
(74) Representative: D Young & Co LLP

(56) References cited:
- EP-A1- 2 196 646
- WO-A1-2015/025624

## Description

### BACKGROUND OF THE INVENTION

### 1. Field of the Invention

The invention relates to an exhaust gas purification control apparatus for an internal combustion engine (hereinafter, also referred to as engine).

### 2. Description of Related Art

A NOx storage reduction catalyst (hereinafter, also referred to as NOx catalyst) that stores NOx contained in exhaust gas is arranged in an exhaust system of a diesel engine that is mounted on a vehicle, or the like, and exhaust gas is purified by the use of the NOx catalyst. For example, a NOx storage reduction (NSR) catalyst, or the like, is used as the NOx catalyst.

In such a NOx catalyst, the capability to store NOx contained in exhaust gas decreases with an increase in NOx storage amount. In order to solve such an inconvenience, conventionally, when it is determined that the NOx storage amount in the NOx catalyst reaches a predetermined amount and a catalyst temperature (bed temperature) falls within a predetermined temperature range, the NOx catalyst is regenerated by carrying out a rich spike operation (the process of temporarily enriching an exhaust gas air-fuel ratio) (see, for example, Japanese Patent Application Publication No. 2005-163590 (JP 2005-163590 A)).

Incidentally, in an exhaust gas purification control apparatus including a NOx catalyst, if the rich spike operation is carried out in a state where a NOx storage amount in the NOx catalyst is large, NOx (untreated NOx) that is too much to be treated (reduction purification treatment) due to an excessive amount of NOx that is emitted at the start of the rich spike operation flows out to a downstream side of the catalyst, so there is a concern that exhaust emission deteriorates.

### SUMMARY OF THE INVENTION

The invention provides an exhaust gas purification control apparatus that is able to suppress the amount of NOx that is emitted from a NOx catalyst at the start of a rich spike operation even in a state where a NOx storage amount in the NOx catalyst is large.

An aspect of the invention provides an exhaust gas purification control apparatus for an internal combustion engine in which a NOx storage reduction catalyst is provided in an exhaust system. The exhaust gas purification control apparatus includes: catalyst temperature acquisition means for acquiring a catalyst temperature of the NOx storage reduction catalyst; air-fuel ratio acquisition means for acquiring an exhaust gas air-fuel ratio upstream of the NOx storage reduction catalyst; NOx storage amount acquisition means for acquiring a NOx storage amount of the NOx storage reduction catalyst; fuel supply means for supplying fuel into exhaust gas upstream of the NOx storage reduction catalyst; and rich spike operation control means for, when the NOx storage amount exceeds a first threshold and smaller than or equal to a second threshold larger than the first threshold in a state where the catalyst temperature exceeds a predetermined temperature, carrying out rich spike operation by controlling a fuel supply amount while a target exhaust gas air-fuel ratio upstream of the NOx storage reduction catalyst is set to a predetermined rich air-fuel ratio, and, when the NOx storage amount exceeds the second threshold in a state where the catalyst temperature exceeds the predetermined temperature, carrying out rich spike operation for controlling a fuel supply amount while the target air-fuel ratio is set to a less rich air-fuel ratio that is an air-fuel ratio leaner than the predetermined rich air-fuel ratio.

According to the above aspect, the rich spike operation is started at a leaner exhaust gas air-fuel ratio when the NOx storage amount in the catalyst is large and exceeds the second threshold than when the NOx storage amount is smaller than or equal to the second threshold. When the NOx storage amount in the catalyst is large in this way, by setting the rich air-fuel ratio at the start of the rich spike operation (in the initial stage of the rich spike operation) to be leaner (setting the rich air-fuel ratio so as to be less richer than that at the time of the normal regeneration process), it is possible to suppress the amount of NOx that is released from the catalyst. Thus, it is possible to reduce the amount of flow of untreated NOx, so it is possible to suppress deterioration of exhaust emission.

In the above aspect, when the rich spike operation control means starts the rich spike operation in a state where a NOx storage amount in the catalyst exceeds the second threshold, the rich spike operation control means may change the exhaust gas air-fuel ratio at the time of a lapse of a predetermined time from the start of the rich spike operation to an air-fuel ratio richer than the exhaust gas air-fuel ratio at the start of the rich spike operation. In this way, after a lapse of the predetermined time from the start of the rich spike operation, specifically, after the NOx release amount suppressing process at the start of the rich spike operation (in the initial stage of the rich spike operation) ends, the exhaust gas air-fuel ratio that has been set to a lean side is changed to a rich side. Thus, it is possible to early complete regeneration of the NOx catalyst.

In the above aspect, in consideration of the temperature characteristic of the NOx storage reduction catalyst, the second threshold may be set so as to reduce as the catalyst temperature (catalyst bed temperature) rises. By changing the second threshold in response to the catalyst temperature in this way, it is possible to further effectively suppress a release of untreated NOx.

According to the aspect of the invention, even in a state where the NOx storage amount in the NOx storage reduction catalyst is large, it is possible to suppress the amount of NOx that is released from the NOx catalyst when the rich spike operation is started.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic configuration view that shows an example of an engine to which an exhaust gas purification control apparatus according to the invention is applied and a control system of the engine;
FIG. 2 is a block diagram that shows the configuration of the control system, such as an ECU;
FIG. 3 is a graph that shows an example of a threshold that is set with respect to a catalyst bed temperature, and a first threshold and a second threshold that are set with respect to a NOx storage amount;
FIG. 4 is a flowchart that shows an example of NOx reduction control that is executed by the ECU;
FIG. 5A is a graph that shows a target rich air-fuel ratio in normal rich spike operation;
FIG. 5B is a graph that shows a target rich air-fuel ratio in rich spike operation that is executed in the case where a NOx storage amount is large; and
FIG. 6 is a graph that shows another example of a threshold that is set with respect to a catalyst bed temperature, and a first threshold and a second threshold that are set with respect to a NOx storage amount.

### DETAILED DESCRIPTION OF EMBODIMENTS

Hereinafter, an embodiment of the invention will be described with reference to the accompanying drawings. In the present embodiment, the case where the invention is applied to a common-rail direct-injection multi-cylinder (for example, in-line four-cylinder) diesel engine (internal combustion engine) mounted on a vehicle will be described.

### Configuration of Engine

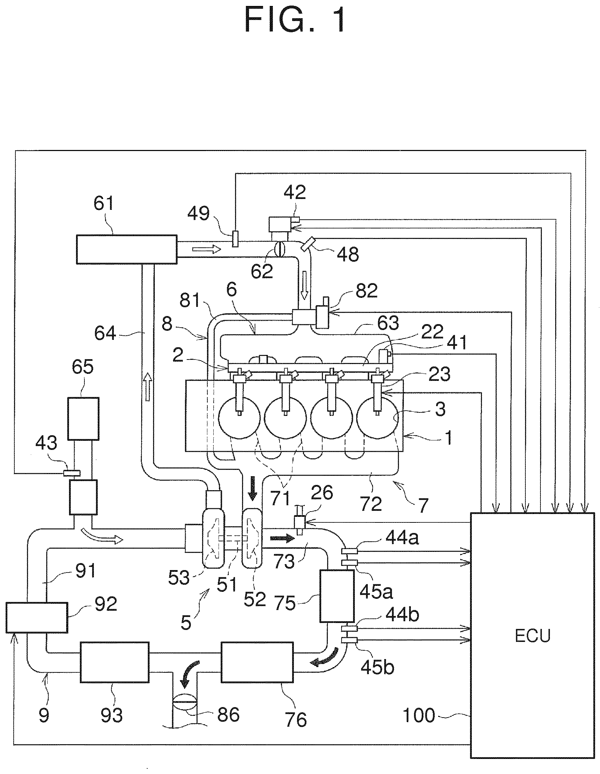

Initially, the schematic configuration of the diesel engine (hereinafter, simply referred to as engine) according to the present embodiment will be described. FIG. 1 is a schematic configuration view of the engine 1 and a control system of the engine 1.

As shown in FIG. 1, the engine 1 is configured as a diesel engine system including a fuel supply system 2, combustion chambers 3, an intake system 6, an exhaust system 7, and the like, as major components. Among these components, the fuel supply system 2 is a so-called common-rail system, and includes a common rail 22, common to all cylinders, and an injector (fuel injection valve) 23 for each cylinder. A transmission (not shown) is coupled to a crankshaft of the engine 1.

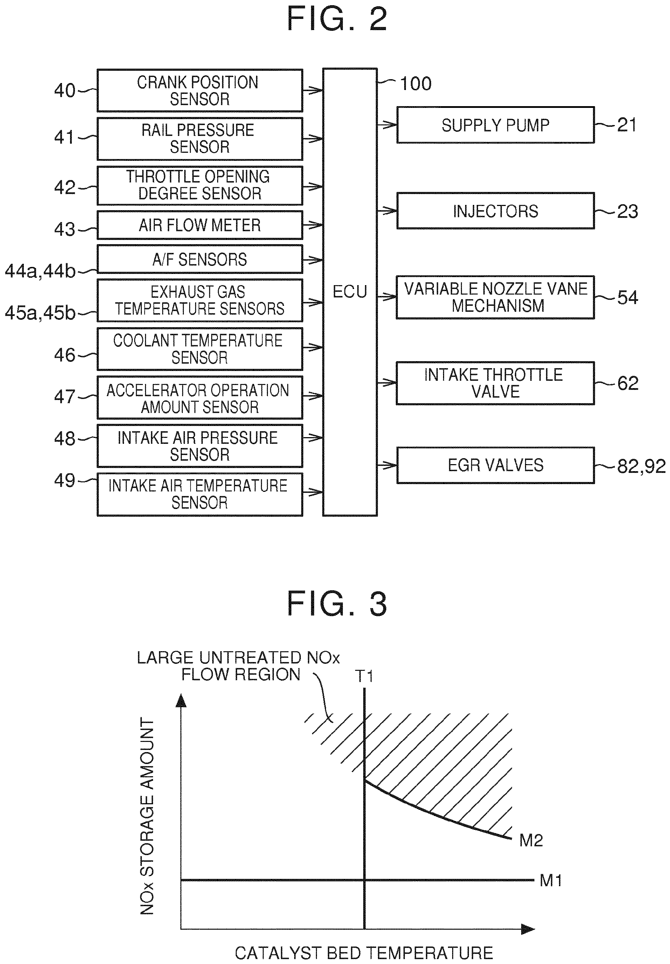

Fuel pressurized by a supply pump 21 (see FIG. 2) is supplied to the common rail 22. The common rail 22 has the function of an accumulator that holds (accumulates) high-pressure fuel at a predetermined pressure, and distributes the accumulated fuel among the injectors 23 (the reference numeral is affixed to only the right-end one in FIG. 1). Each of the injectors 23 is formed of a piezoelectric injector that includes a piezoelectric element inside and that opens to inject and supply fuel into a corresponding one of the combustion chambers 3 as needed.

A fuel addition valve 26 is arranged in an exhaust pipe 73 upstream of an NSR catalyst 75 (described later), and supplies fuel into the exhaust pipe 73 (supplies fuel into exhaust gas upstream of the NSR catalyst 75) when the fuel addition valve 26 is open. The open/closed state of the fuel addition valve 26 is controlled by an electronic control unit (ECU) 100. Fuel from the supply pump 21 is supplied to the fuel addition valve 26. The fuel addition valve 26 is an example of fuel supply means according to the invention.

The intake system 6 includes an intake manifold 63 that is connected to intake ports 15a formed in a cylinder head. An intake pipe 64 is connected to the intake manifold 63. The intake system 6 constitutes an intake passage. In the intake passage, an air cleaner 65, an air flow meter 43 and an intake throttle valve (diesel throttle) 62 are arranged in order from the upstream side of the flow of intake air. The air flow meter 43 outputs an electric signal corresponding to the amount of air flowing into the intake passage via the air cleaner 65.

The exhaust system 7 includes an exhaust manifold 72 that is connected to exhaust ports 71 formed in the cylinder head. The exhaust pipe 73 is connected to the exhaust manifold 72. The exhaust system 7 constitutes an exhaust passage. The NSR catalyst 75, which is a NOx storage reduction exhaust gas purification catalyst, and a diesel particulate filter (DPF) 76 are arranged in the exhaust passage.

The NSR catalyst 75 stores NOx in exhaust gas when the air-fuel ratio of exhaust gas flowing into the NSR catalyst 75 is lean (higher than or equal to a stoichiometric air-fuel ratio), releases NOx stored therein and causes the released NOx to react with unburned components (CO, HC) contained in exhaust gas to be decomposed (reduced and purified) into oxygen and hydrogen when the air-fuel ratio of exhaust gas flowing into the NSR catalyst 75 is rich.

### Turbocharger

The engine 1 of this example includes a turbocharger (supercharger) 5. The turbocharger 5 includes a turbine wheel 52 and a compressor impeller 53 that are coupled by a turbine shaft 51. The compressor impeller 53 is arranged inside the intake pipe 64. The turbine wheel 52 is arranged inside the exhaust pipe 73. The turbocharger 5 carries out so-called supercharging operation in which intake pressure is increased by rotating the compressor impeller 53 with the use of exhaust flow (exhaust pressure) received by the turbine wheel 52.

An intercooler 61 for forcibly cooling intake air increased in temperature as a result of supercharging of the turbocharger 5 is provided in the intake pipe 64 downstream of the turbocharger 5 (compressor impeller 53) with respect to the flow of intake air. The turbocharger 5 in the present embodiment is a variable nozzle turbocharger, and includes a variable nozzle vane mechanism 54 (see FIG. 2) at the turbine wheel 52 side. The turbocharger 5 is able to adjust the supercharging pressure of the engine 1 by adjusting the opening degree of the variable nozzle vane mechanism 54.

### EGR System

The engine 1 includes an MPL-EGR system including an HPL-EGR mechanism (high-pressure EGR mechanism) 8 and an LPL-EGR mechanism (low-pressure EGR mechanism) 9. The HPL-EGR mechanism 8 includes a high-pressure EGR passage 81 and a high-pressure EGR valve 82. The LPL-EGR mechanism 9 includes a low-pressure EGR passage 91, a low-pressure EGR valve 92 and a low-pressure EGR cooler 93.

### Sensors

Various sensors are installed at portions of the engine 1, and output environmental conditions of the respective portions and signals related to the operating state of the engine 1.

For example, the air flow meter 43 outputs a detection signal corresponding to the flow rate of intake air (intake air amount) at a portion upstream of the intake throttle valve 62 in the intake system 6. A rail pressure sensor 41 outputs a detection signal corresponding to the pressure of fuel that is stored in the common rail 22. A throttle opening degree sensor 42 detects the opening degree of the intake throttle valve 62. An intake air pressure sensor 48 is arranged downstream of the intake throttle valve 62. The intake air pressure sensor 48 outputs a detection signal corresponding to the pressure of intake air. An intake air temperature sensor 49 is arranged downstream of the intercooler 61. The intake air temperature sensor 49 outputs a detection signal corresponding to the temperature of intake air.

Air-fuel ratio (A/F) sensors 44a, 44b are respectively arranged on the upstream side and downstream side of the NSR catalyst 75, and each output a detection signal that continuously varies with the oxygen concentration in exhaust gas. It is possible to detect an exhaust gas air-fuel ratio upstream of the NSR catalyst 75 on the basis of a detection signal of the upstream-side A/F sensor 44a. The upstream-side A/F sensor 44a is an example of exhaust gas air-fuel ratio acquisition means according to the invention.

Similarly, exhaust gas temperature sensors 45a, 45b are respectively arranged on the upstream side and downstream side of the NSR catalyst 75, and each output a detection signal corresponding to the temperature of exhaust gas (exhaust gas temperature). It is possible to detect the catalyst bed temperature of the NSR catalyst 75 on the basis of a detection signal of the downstream-side exhaust gas temperature sensor 45b. The downstream-side exhaust gas temperature sensor 45b is an example of catalyst temperature acquisition means according to the invention.

The exhaust gas purification control apparatus according to the invention is implemented by the control system, such as the above-described A/F sensor 44a, exhaust gas temperature sensor 45b, fuel addition valve 26 and ECU 100.

### ECU

The ECU 100 includes a microcomputer and input/output circuits. The microcomputer is formed of a central processing unit (CPU), a read only memory (ROM), a random access memory (RAM) (which are not shown), and the like.

As shown in FIG. 2, the rail pressure sensor 41, the throttle opening degree sensor 42, the air flow meter 43, the A/F sensors 44a, 44b, the exhaust gas temperature sensors 45a, 45b, the intake air pressure sensor 48 and the intake air temperature sensor 49 are connected to the input circuit of the ECU 100. A coolant temperature sensor 46, an accelerator operation amount sensor 47, a crank position sensor 40, and the like, are connected to the input circuit. The coolant temperature sensor 46 outputs a detection signal corresponding to the coolant temperature of the engine 1. The accelerator operation amount sensor 47 outputs a detection signal corresponding to a depression amount of an accelerator pedal. The crank position sensor 40 detects the rotation speed of the engine 1.

The supply pump 21, the injectors 23, the intake throttle valve 62, the EGR valves 82, 92, the variable nozzle vane mechanism (an actuator that adjusts the opening degree of the variable nozzle vane) 54 of the turbocharger 5, and the like, are connected to the output circuit of the ECU 100, and the fuel addition valve 26 is further connected to the output circuit of the ECU 100 (see FIG. 1).

The ECU 100 executes various controls over the engine 1 on the basis of the output signals of the above-described various sensors. The various controls over the engine 1 include fuel injection amount/injection timing control (opening and closing control over the injectors 23), control over the opening degree (throttle opening degree) of the intake throttle valve 62, EGR control (opening degree control over the EGR valves 82, 92), and the like. In addition, the ECU 100 executes the following NOx reduction control (catalyst regeneration control).

### NOx Reduction Control

Generally, in the diesel engine 1, the air-fuel ratio of exhaust gas is a lean air-fuel ratio in most of the operation region, and, in an ordinary operating state, an atmosphere around the NSR catalyst 75 is in a state where the oxygen concentration is high, and NOx in exhaust gas is stored in the NSR catalyst 75. A situation that the atmosphere around the NSR catalyst 75 has a low oxygen concentration is extremely rare, so the NOx storage amount gradually increases, and the NOx storage capability of the NSR catalyst 75 decreases accordingly. When the NOx storage amount that is estimated on the basis of the engine operating state, or the like, exceeds a predetermined threshold (when a catalyst regeneration condition is satisfied), the NSR catalyst 75 is regenerated by carrying out a rich spike operation for temporarily enriching the exhaust gas air-fuel ratio by supplying fuel into exhaust gas through addition of fuel from the fuel addition valve 26 (or post injection from the injectors 23) (NOx reduction control).

In the exhaust gas purification control apparatus including the NSR catalyst 75, if the rich spike operation is carried out in a state where the NOx storage amount in the NSR catalyst 75 is large, NOx (untreated NOx) that is too much to be treated (reduction purification treatment) due to an excessive amount of NOx that is emitted at the start of the rich spike operation flows out to the downstream side of the catalyst, so there is a concern that exhaust emission deteriorates.

In the present embodiment, a first threshold M1 (normal threshold) and a second threshold M2 larger than the first threshold M1 are set as a threshold for the NOx storage amount. When the NOx storage amount in the NSR catalyst 75 is too large and exceeds the second threshold M2, the amount of NOx emitted from the NSR catalyst 75 is suppressed at the start (initial stage) of the rich spike operation by starting the rich spike operation at an exhaust gas air-fuel ratio leaner than that when the NOx storage amount is smaller than or equal to the second threshold M2. A specific example thereof (NOx reduction control) will be described below.

Initially, the first threshold M1 and the second threshold M2 that are used in NOx reduction control and a method of estimating the NOx storage amount will be described below.

### First Threshold M1

The first threshold M1 is a value that is normally set in the NOx reduction control of this type. The first threshold M1 is set to a value (NOx storage amount) smaller by a predetermined amount than a NOx storage amount at which the NOx storage capability of the NSR catalyst 75 saturates.

### Second Threshold M2

The second threshold M2 is a value larger than the above-described normal first threshold M1 (a value smaller than the saturation amount of the NOx storage amount), and is a threshold for determining a region of the NOx storage amount much larger than the normal first threshold M1 (NOx storage amount) (region in which flow of untreated NOx is large in FIG. 3). The second threshold M2 is set so as to be a smaller value as the catalyst bed temperature of the NSR catalyst 75 rises in consideration of the temperature characteristic of the NSR catalyst 75 in a region in which flow of untreated NOx is large as shown in FIG. 3, that is, the fact that the NOx storage amount reduces as the catalyst bed temperature of the NSR catalyst 75 rises.

A method of setting the second threshold M2 includes a method in which the relationship between the catalyst bed temperature and NOx storage amount of the NSR catalyst 75 is obtained by experiment, simulation, or the like, in advance and then the second threshold M2 is determined in consideration of the region in which flow of untreated NOx is large as shown in FIG. 3 on the basis of the obtained relationship.

Even when the NOx storage amount in the NSR catalyst 75 reaches the above-described first threshold M1, the rich spike operation may be prohibited depending on the operating region of the engine 1, or the like, so there is a case where the NOx storage amount exceeds the first threshold M1.

### Estimation of NOx Storage Amount

The NOx storage amount is estimated by the ECU 100. A method of estimating the NOx storage amount includes a method in which a NOx storage amount commensurate with an engine rotation speed and a fuel injection amount from each injector 23 is obtained as a map by experiment or simulation in advance and then the NOx storage amount that is obtained from the map is integrated. There is also a method in which the NOx storage amount is estimated on the basis of a vehicle travel distance or a total fuel injection amount from the last NOx reduction control end timing. The process of estimating the NOx storage amount, which is executed by the ECU 100, corresponds to a process as NOx storage amount acquisition means according to the invention.

### Specific Example of NOx Reduction Control

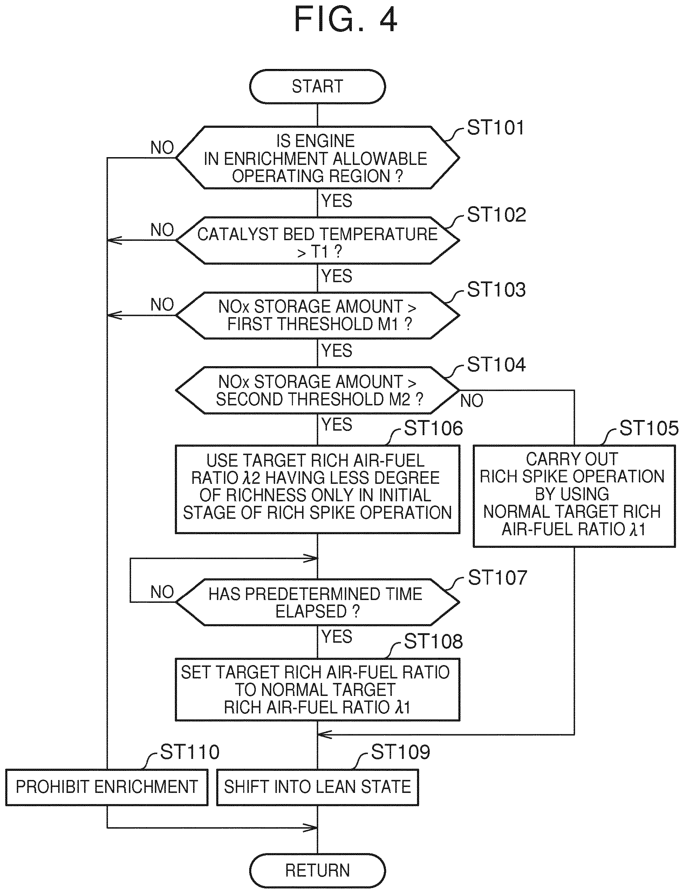

Next, an example of NOx reduction control that is executed by the ECU 100 will be described with reference to the flowchart shown in FIG. 4. This control routine is periodically executed. The ECU 100 estimates the NOx storage amount in the NSR catalyst 75 through the above-described process during operation of the engine 1.

When the control routine shown in FIG. 4 is started, initially, it is determined in step ST101 whether the engine 1 is in an operating region in which enrichment is allowed. Specifically, for example, it is determined whether the engine 1 is in an operating region in which enrichment of the exhaust gas air-fuel ratio is allowed on the basis of an engine rotation speed, a load, a vehicle speed, a gear ratio of the transmission, and the like. When the determination result is negative (NO), enrichment of the exhaust gas air-fuel ratio is prohibited (step ST110). When the determination result of step ST101 is affirmative (YES), the process proceeds to step ST102.

In step ST102, the catalyst bed temperature of the NSR catalyst 75 is detected on the basis of the output signal of the exhaust gas temperature sensor 45b, and it is determined whether the catalyst bed temperature is higher than the threshold T1. When the determination result is negative (NO), enrichment is prohibited (step ST110). When the determination result of step ST102 is affirmative (YES), the process proceeds to step ST103.

The threshold (temperature) T1 that is set with respect to the catalyst bed temperature of the NSR catalyst 75 is set in consideration of a lower limit value of a temperature range in which the NSR catalyst 75 is in an active state and it is possible to release or reduce NOx that is stored in the NSR catalyst 75 when the rich spike operation is carried out.

The catalyst bed temperature of the NSR catalyst 75 may be estimated on the basis of the operating state of the engine 1. Alternatively, a catalyst temperature sensor may be provided in the NSR catalyst 75, and the catalyst bed temperature may be directly detected on the basis of the output of the sensor.

In step ST103, it is determined whether the NOx storage amount of the NSR catalyst 75 is larger than the above-described first threshold M1 (normal threshold). When the determination result is negative (NO), enrichment is prohibited (step ST110). When the determination result of step ST103 is affirmative (YES) (when the catalyst regeneration condition is satisfied as a result of the fact that the NOx storage amount is larger than the first threshold M1), the process proceeds to step ST104.

In step ST104, it is determined whether the NOx storage amount of the NSR catalyst 75 is larger than the above-described second threshold M2 (a value larger than the normal first threshold M1). When the determination result is negative (NO), that is, when the NOx storage amount is larger than the first threshold M1 and is smaller than or equal to the second threshold M2, the process proceeds to step ST105.

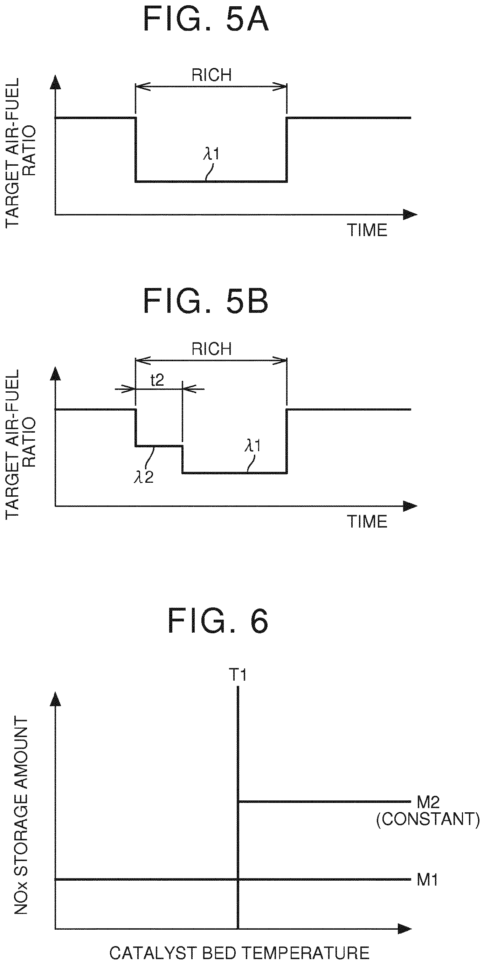

In step ST105, a normal target rich air-fuel ratio (target exhaust gas air-fuel ratio) λ1 is set, and the rich spike operation (normal rich spike operation) is carried out. Specifically, supply of fuel is controlled such that the exhaust gas air-fuel ratio that is detected on the basis of the detection signal of the A/F sensor 44a (arranged upstream of the NSR catalyst 75) becomes the target rich air-fuel ratio λ1 by supplying fuel into exhaust gas with the use of addition of fuel from the fuel addition valve 26 (the fuel supply amount is controlled such that the exhaust gas air-fuel ratio becomes the target rich air-fuel ratio λ1). By carrying out such a rich spike operation, NOx that is stored in the NSR catalyst 75 is released, and the released NOx reacts with unburned fuel (CO, HC) contained in exhaust gas to be reduced and purified. Thus, the NOx storage amount in the NSR catalyst 75 reduces, the rich spike operation is ended at the time when the NOx storage amount has decreased to a predetermined amount (NOx reduction control end determination amount), and the exhaust gas air-fuel ratio is returned to a lean state (step ST109). During such a normal rich spike operation, the target rich air-fuel ratio λ1 is set to a constant value (see FIG. 5A). The target rich air-fuel ratio λ1 is a value (rich air-fuel ratio) that is normally set in NOx reduction control of this type.

The normal rich spike operation may be ended at the time when a predetermined time (a time that is required until NOx that is stored in the NSR catalyst 75 is sufficiently released) elapses from time at which the normal rich spike operation is started.

On the other hand, when the determination result of step ST104 is affirmative (YES), that is, when the NOx storage amount in the NSR catalyst 75 exceeds the second threshold M2 (when the NOx storage amount is large and, as a result, flow of untreated NOx at the start of the rich spike operation is large), the process proceeds to step ST106.

In step ST106, the target rich air-fuel ratio in the initial stage of the rich spike operation is set to a lean side with respect to the above-described normal target rich air-fuel ratio λ1. Specifically, as shown in FIG. 5B, in the initial stage of the rich spike operation, the rich spike operation is carried out while a target rich air-fuel ratio (target exhaust gas air-fuel ratio) λ2 that is less richer than the normal target rich air-fuel ratio λ1 is set. More specifically, addition of fuel from the fuel addition valve 26 is controlled such that the exhaust gas air-fuel ratio in the initial stage of the rich spike operation (the air-fuel ratio that is detected by the A/F sensor 44a) becomes the target rich air-fuel ratio λ2 (the fuel supply amount is controlled such that the exhaust gas air-fuel ratio becomes the target rich air-fuel ratio λ2). By decreasing the degree of richness of the target rich air-fuel ratio in the initial stage of the rich spike operation in this way, it is possible to suppress an instantaneous release of NOx at the start of the rich spike operation (at the first attack of rich spike), so it is possible to reduce the amount of emission of untreated NOx.

The inventors obtained findings through experiment that, as the degree of richness of the exhaust gas air-fuel ratio at the start of the rich spike operation (at the first attack of rich spike) in NOx reduction control becomes higher, the amount of NOx that is instantaneously released from the NSR catalyst 75 increases. On the basis of such findings, in the present embodiment, when the NOx storage amount of the NSR catalyst 75 is large and exceeds the second threshold M2, the amount of emission of NOx is suppressed by starting the rich spike operation at the target rich air-fuel ratio λ2 that is lower in the degree of richness than the normal target rich air-fuel ratio λ1. The target rich air-fuel ratio λ2 is set by obtaining a value (exhaust gas air-fuel ratio), at which it is possible to suppress a release of untreated NOx even when the rich spike operation is carried out in a state where the NOx storage amount of the NSR catalyst 75 exceeds the second threshold M2, through experiment or simulation.

At the time when the predetermined time (t2) has elapsed from the start of the rich spike operation of which the target rich air-fuel ratio is a lower degree of richness as described above (at the time when the determination result of step ST107 is affirmative (YES)), the target rich air-fuel ratio is set to the normal target rich air-fuel ratio λ1 (see FIG. 5B), and the rich spike operation is continued. After that, the rich spike operation is ended at the time when the NOx storage amount of the NSR catalyst 75 has decreased to the above-described predetermined amount, and the exhaust gas air-fuel ratio is returned to a lean state (step ST109). In this case as well, the end of the rich spike operation may be managed by time.

A period during which the rich spike operation is carried out at the target rich air-fuel ratio λ2 (t2 period shown in FIG. 5B) is set to a time until the NOx storage amount of the NSR catalyst 75 becomes smaller than or equal to the second threshold M2 and is in a state where it is of no matter if the rich spike operation shifts into the rich spike operation at the normal target rich air-fuel ratio λ1.

Step ST102 to step ST109 of the NOx reduction control process (FIG. 4) that is executed by the ECU 100 correspond to processes that are executed as rich spike operation control means according to the invention.

### Advantageous Effects

As described above, according to the present embodiment, the rich spike operation is started at an exhaust gas air-fuel ratio that is leaner when the NOx storage amount in the NSR catalyst 75 is large and exceeds the second threshold M2 than when the NOx storage amount is smaller than or equal to the second threshold M2. In this way, when the NOx storage amount in the NSR catalyst 75 is large, the rich air-fuel ratio at the start of the rich spike operation (in the initial stage of the rich spike operation) is set to a lean side (set to a less degree of richness than that during the normal rich spike operation). Thus, it is possible to suppress the amount of emission of NOx that is emitted from the NSR catalyst 75. Thus, it is possible to reduce the amount of flow of untreated NOx, so it is possible to suppress deterioration of exhaust emission. In addition, the second threshold M2 is set so as to reduce as the catalyst bed temperature of the NSR catalyst 75 rises in accordance with the temperature characteristic of the NSR catalyst 75 in the region in which flow of untreated NOx is large, so it is possible to further effectively reduce the amount of flow of untreated NOx.

In the present embodiment, after a lapse of the predetermined time (t2) from the start of the rich spike operation of which the target rich air-fuel ratio has a lower degree of richness (the rich spike operation using the target rich air-fuel ratio λ2) (after the end of the NOx release suppression process in the initial stage of the rich spike operation), the rich spike operation is carried out while the exhaust gas air-fuel ratio is set to the normal target rich air-fuel ratio λ1, so it is possible to early complete regeneration of the NSR catalyst 75.

### Alternative Embodiments

The embodiment described above is illustrative and not restrictive in all respects. Therefore, the technical scope of the invention should not be interpreted from only the above-described embodiment but be defined on the basis of the appended claims. The technical scope of the invention encompasses the appended claims, equivalents thereof and all the modifications within the scope of the invention.

For example, in the above-described embodiment, the second threshold M2 is set so as to reduce as the catalyst bed temperature of the NSR catalyst 75 rises; however, the invention is not limited to this configuration. As shown in FIG. 6, the second threshold M2 may be set to a constant value (constant NOx storage amount) irrespective of the catalyst bed temperature. However, in this case, when the second threshold M2 is set to a lower side, it is possible to suppress flow of untreated NOx, but a fuel consumption rate increases. Conversely, when the second threshold M2 is set to a higher side, it is possible to suppress an increase in fuel consumption rate, but the effect of reducing flow of untreated NOx reduces. In consideration of such points, the second threshold M2 (constant value) is set.

In the above-described embodiment, the rich spike operation is carried out by adding fuel from the fuel addition valve; however, the invention is not limited to this configuration. The rich spike operation may be carried out by the use of post injection after main fuel injection or the rich spike operation may be carried out by the use of a combination of these fuel addition and post injection.

In the above-described embodiment, the invention is applied to the exhaust gas purification control apparatus including the NSR catalyst as a NOx storage reduction catalyst; however, the invention is not limited to this configuration. For example, the invention is also applicable to an exhaust gas purification control apparatus including another NOx storage reduction catalyst, such as a diesel particulate-NOx reduction system (DPNR) catalyst.

In the above-described example, the exhaust gas purification control apparatus according to the invention is applied to a direct-injection four-cylinder diesel engine; however, the invention is not limited to this configuration. For example, the exhaust gas purification control apparatus according to the invention is also applicable to a diesel engine having any number of cylinders, such as a direct-injection six-cylinder diesel engine.

The exhaust gas purification control apparatus according to the invention is also applicable to a lean-burn gasoline engine having an operating region in which engine operation is performed by subjecting air-fuel mixture having a high air-fuel ratio (lean atmosphere) to combustion occupies a major part of all the operating region. Not limited to a vehicle use, the exhaust gas purification control apparatus according to the invention is also applicable to an engine that is used in another application.

The invention is usable in an apparatus that purifies exhaust gas from an internal combustion engine (engine) and, more specifically, effectively usable in an exhaust gas purification control apparatus including a NOx storage reduction catalyst.

## Claims

1. An exhaust gas purification control apparatus for an internal combustion engine (1) in which a NOx storage reduction catalyst (75) is provided in an exhaust system (7), the exhaust gas purification control apparatus comprising:
catalyst temperature acquisition means (45b) for acquiring a catalyst temperature of the NOx storage reduction catalyst;
air-fuel ratio acquisition means (44a) for acquiring an exhaust gas air-fuel ratio upstream of the NOx storage reduction catalyst;
NOx storage amount acquisition means (100) for acquiring a NOx storage amount of the NOx storage reduction catalyst;
fuel supply means (26) for supplying fuel into exhaust gas upstream of the NOx storage reduction catalyst; and
rich spike operation control means (100), **characterized in that**:
the rich spike operation control means is configured for, when the NOx storage amount exceeds a first threshold and is smaller than or equal to a second threshold larger than the first threshold in a state where the catalyst temperature exceeds a predetermined temperature, carrying out rich spike operation by controlling a fuel supply amount while a target exhaust gas air-fuel ratio upstream of the NOx storage reduction catalyst is set to a predetermined rich air-fuel ratio, and, when the NOx storage amount exceeds the second threshold in a state where the catalyst temperature exceeds the predetermined temperature, carrying out rich spike operation for controlling the fuel supply amount while the target air-fuel ratio is set to a less rich air-fuel ratio that is an air-fuel ratio leaner than the predetermined rich air-fuel ratio.

2. The exhaust gas purification control apparatus according to claim 1, wherein
when the rich spike operation control means starts the rich spike operation in a state where the NOx storage amount in the catalyst exceeds the second threshold, the rich spike operation control means is configured to change the exhaust gas air-fuel ratio at the time of a lapse of a predetermined time from the start of the rich spike operation to an air-fuel ratio richer than the exhaust gas air-fuel ratio at the start of the rich spike operation.

3. The exhaust gas purification control apparatus according to claim 1 or 2, wherein
the second threshold is set so as to reduce as the catalyst temperature rises.

## Patentansprüche

1. Abgasreinigungssteuervorrichtung für eine Verbrennungskraftmaschine (1), bei der sich ein NOₓ-Speicherreduktionskatalysator (75) in einem Abgassystem (7) befindet, wobei die Abgasreinigungssteuervorrichtung aufweist:
eine Katalysatortemperaturerhaltungseinrichtung (45b) zum Erhalten einer Katalysatortemperatur des NOₓ-Speicherreduktionskatalysators;
eine Luft-/Kraftstoff-Verhältniserhaltungseinrichtung (44a) zum Erhalten eines Abgas-Luft-/Kraftstoff-Verhältnisses stromaufwärts von dem NOₓ-Speicherreduktionskatalysator;
eine NOₓ-Speichermengenerhaltungseinrichtung (100) zum Erhalten einer NOₓ-Speichermenge des NOₓ-Speicherreduktionskatalysators;
eine Kraftstoffzuführeinrichtung (26) zum Zuführen von Kraftstoff in das Abgas stromaufwärts von dem NOₓ-Speicherreduktionskatalysator; und
eine Fettspitzenbetriebssteuereinrichtung (100), **dadurch gekennzeichnet, dass**:
die Fettspitzenbetriebssteuereinrichtung so konfiguriert ist, dass sie, wenn die NOₓ-Speichermenge einen ersten Schwellenwert überschreitet und kleiner oder gleich einem zweiten Schwellenwert ist, der größer ist als der erste Schwellenwert, in einem Zustand, bei dem die Katalysatortemperatur eine vorgegebene Temperatur überschreitet, einen Fettspitzenbetrieb durchführt, indem eine Kraftstoffzuführmenge gesteuert wird, während ein Soll-Abgas-Luft-/Kraftstoff-Verhältnis stromaufwärts von dem NOₓ-Speicherreduktionskatalysator auf ein vorgegebenes fettes Luft-/Kraftstoff-Verhältnis eingestellt wird, und, wenn die NOₓ-Speichermenge den zweiten Schwellenwert in einem Zustand überschreitet, bei dem die Katalysatortemperatur die vorgegebene Temperatur überschreitet, einen Fettspitzenbetrieb durchführt, um die Kraftstoffzuführmenge zu steuern, während das Soll-Luft-/Kraftstoff-Verhältnis auf ein weniger fettes Luft-/Kraftstoff-Verhältnis eingestellt wird, bei dem es sich um ein Luft-/Kraftstoff-Verhältnis handelt, das magerer ist als das vorgegebene fette Luft-/Kraftstoff-Verhältnis.

2. Abgasreinigungssteuervorrichtung nach Anspruch 1, wobei, wenn die Fettspitzenbetriebssteuereinrichtung den Fettspitzenbetrieb in einem Zustand startet, bei dem die NOₓ-Speichermenge in dem Katalysator den zweiten Schwellenwert überschreitet, die Fettspitzenbetriebssteuereinrichtung so konfiguriert ist, dass sie das Abgas-Luft-/Kraftstoff-Verhältnis zu der Zeit ab einem Verstreichen einer vorgegebenen Zeit von dem Start des Fettspitzenbetriebs bis zu einem Zeitpunkt, da das Luft-/Kraftstoff-Verhältnis fetter ist als das Abgas-Luft-/Kraftstoff-Verhältnis bei dem Start des Fettspitzenbetriebs, ändert.

3. Abgasreinigungssteuervorrichtung nach Anspruch 1 oder 2, wobei der zweite Schwellenwert so eingestellt ist, dass er sich verringert, während die Katalysatortemperatur steigt.

## Revendications

1. Appareil de commande d'épuration des gaz d'échappement pour un moteur à combustion interne (1) dans lequel un catalyseur de réduction de stockage des NOx (75) est prévu dans un système d'échappement (7), l'appareil de commande d'épuration des gaz d'échappement comprenant :
un moyen d'acquisition de température de catalyseur (45b) pour acquérir une température de catalyseur du catalyseur de réduction de stockage des NOx ;
un moyen d'acquisition de rapport air/combustible (44a) pour acquérir un rapport air/combustible des gaz d'échappement en amont du catalyseur de réduction de stockage des NOx ;
un moyen d'acquisition de quantité de stockage des NOx (100) pour acquérir une quantité de stockage des NOx du catalyseur de réduction de stockage des NOx ;
un moyen d'approvisionnement en carburant (26) pour délivrer un carburant jusque dans un gaz d'échappement en amont du catalyseur de réduction de stockage des NOx ; et
un moyen de commande d'opération de pic de richesse (100), **caractérisé en ce que** :
le moyen de commande d'opération de pic de richesse est configuré pour, lorsque la quantité de stockage des NOx dépasse un premier seuil et est inférieure ou égale à un second seuil supérieur au premier seuil dans un état où la température de catalyseur dépasse une température prédéterminée, réaliser une opération de pic de richesse en commandant une quantité d'approvisionnement en carburant pendant qu'un rapport air/combustible cible de gaz d'échappement en amont du catalyseur de réduction de stockage des NOx est réglé à un rapport air/combustible riche prédéterminé, et, lorsque la quantité de stockage des NOx dépasse le second seuil dans un état où la température de catalyseur dépasse la température prédéterminée, réaliser une opération de pic de richesse pour commander la quantité d'approvisionnement en carburant pendant que le rapport air/combustible cible est réglé à un rapport air/combustible moins riche c'est-à-dire un rapport air/combustible plus pauvre que le rapport air/combustible riche prédéterminé.

2. Appareil de commande d'épuration des gaz d'échappement selon la revendication 1, dans lequel lorsque le moyen de commande d'opération de pic de richesse démarre l'opération de pic de richesse dans un état où la quantité de stockage des NOx dans le catalyseur dépasse le second seuil, le moyen de commande d'opération de pic de richesse est configuré pour modifier le rapport air/combustible des gaz d'échappement au moment d'un laps de temps prédéterminé depuis le démarrage de l'opération de pic de richesse en faveur d'un rapport air/combustible plus riche que le rapport air/combustible des gaz d'échappement au démarrage de l'opération de pic de richesse.

3. Appareil de commande d'épuration des gaz d'échappement selon la revendication 1 ou 2, dans lequel le second seuil est réglé de manière à se réduire tandis que la température de catalyseur s'élève.
